# EUROPÄISCHE PATENTSCHRIFT

(11) **EP 0 899 174 B1**
(45) Veröffentlichungstag und Bekanntmachung des Hinweises auf die Patenterteilung: **03.01.2007**
(21) Anmeldenummer: 98112918.2
(22) Anmeldetag: 11.07.1998
(51) Int. Cl.: B60T 8/00

(54) **Verfahren zur Steuerung oder Regelung der Verzögerung bzw. Bremsung eines Kraftfahrzeuges**
Method for controling or regulating the deceleration or braking of a vehicle
Procédé pour commander ou régler la décélération ou le freinage d'un véhicule

(30) Priorität: 23.08.1997 DE 19736759
(43) Veröffentlichungstag der Anmeldung: 03.03.1999
(73) Patentinhaber: Volkswagen Aktiengesellschaft, 38436 Wolfsburg (DE)
(72) Erfinder: Bastian, Andreas Dr., 38114 Braunschweig (DE)

(56) Entgegenhaltungen:
- EP-A- 0 178 439
- DE-A- 19 509 178
- US-A- 5 535 123

## Beschreibung

Die Erfindung betrifft ein Verfahren zur Steuerung oder Regelung der Verzögerung bzw. Bremsung eines Kraftfahrzeuges in Abhängigkeit vom aktuell im Fahrbetrieb vorhandenen Bremsweg bzw. vom aktuellen Abstand zum vorausfahrenden Fahrzeug, bei welchem die Verzögerung bzw. Bremsung des Fahrzeuges dadurch bewirkt wird, daß bei Überschreitung von vorgegebenen fahrbetriebsbezogenen Parametergrenzwerten die Fahrzeugbremse betätigt wird, und im Falle der Unterschreitung von besagten Parametergrenzwerten eine lediglich vom Motorschleppmoment bewirkte Verzögerung generiert wird, gemäß Oberbegriff des Patentanspruches 1.

Betriebsverfahren dieser Art sind bereits vielfältig bekannt. Sie beziehen sich in Ihrer Funktion darauf, entweder den Bremsvorgang im Falle einer Notbremsung zu unterstützten, oder im Falle eines noch weit ausreichenden Bremsweges zum vorausfahrenden Fahrzeug lediglich die Bremsung über das Motorschleppmoment zu nutzen.

Bremsverfahren dieser Art umfassen sogenannte ADR-Systeme, die mit einer Abstandsregelung zur Ermittlung des Abstandes zum vorausfahrenden Fahrzeug und einer entsprechenden Einflußnahme auf die Beschleunigung bzw. Verzögerung des Fahrzeuges ausgestattet sind. Die Brems- oder Verzögerungsstrategien unterteilen sich im allgemeinen in zwei wesentliche Fahrsituationen.
Bis zu einer gewissen Sollverzögerung, die mit dem vorhandenen Bremsweg korreliert wird, wird lediglich eine Verzögerung über das Motorschleppmoment bewirkt. Dies ist die im allgemeinen Sprachgebrauch bezeichnete Motorbremse.
Hierbei findet noch kein Eingriff über die Bremsanlage des Kraftfahrzeuges statt, sondern die Kraftstoffzufuhr wird entweder reduziert oder bei sogenannten Schubabschaltsystemen während der Verzögerung völlig abgeschaltet. Die inneren Reibungswiderstände des im Betrieb befindlichen Motors bewirken diese Verzögerung. Die zweite wesentliche Fahrsituation berücksichtigt die Sollverzögerung und tritt auf bei einem entsprechenden Wert bezüglich des vorhandenen Bremsweges. Der vorhandene Bremsweg wird dabei aus dem Abstand zum vorausfahrenden Fahrzeug ermittelt. Mit anderen Worten heißt dies, daß die Bremsanlage beaufschlagt wird, sobald die Abbremsung über das Motorschleppmoment alleine im Rahmen des vorhandenen verbleibenden Bremsweges nicht mehr möglich ist. Die zweitgenannte Fahrsituation könnte man wiederum unterteilen in Fahrsituationen, die unkritisch sind, und bei welchen lediglich zum Motorschleppmoment noch ein zusätzlicher Verzögerungsanteil über die Bremsanlage benötigt wird, und solche die kritisch sind, nämlich die Notbremsung, bei der es darauf ankommt, den verbleibenden Bremsweg optimal zu nutzen und ggfs. die normalen Reaktionszeiten des Fahrers oder des Systems zu umgehen, indem der Bremsvorgang beschleunigt eingeleitet wird.

Hierzu sind im Stand der Technik technische Ausgestaltungen bekannt. So ist in der DE 4430461 A 1 ein Verfahren zur Steuerung des Bremsdruckes in Abhängigkeit von der Pedalbetätigungsgeschwindigkeit dargestellt. Aus dieser Schrift sind Lösungsmöglichkeiten bekannt, wie sogenannte Notbremsaktionen erkannt werden können. Als Bewertungsparameter wird in diesem genannten Stand der Technik die Pedalbetätigungsgeschwindigkeit herangezogen. Dabei wird vorausgesetzt, daß der Fahrer bei Einleitung einer Notbremsung in der Regel das Bremspedal relativ hektisch betätigt. Wird dies erkannt, so werden Bremsbeschleunigungsmittel eingesetzt, die zu einer Erhöhung des Bremsdruckes in der Bremsanlage führen. Die Bremsdruckerhöhung wird dabei lediglich abhängig gemacht von der Pedalbetätigungsgeschwindigkeit und nicht mehr von dem vom Fahrer am Bremspedal erzeugten Drucksignal. D.h., wenn der Fahrer das Pedal schnell betätigt, wird der Steuerungsdruck nicht proportional sondern überproportional in den Bremsflüssigkeitskreis eingesteuert.

Bei diesem genannten Stand der Technik gelten die beschriebenen Maßnahmen ausschließlich der genauen Bewertung dieser dort benannten Zuschaltschwelle, also diejenige Pedalbetätigungsgeschwindigkeit, ab der die überproportionale Bremsdruckerzeugung eingesteuert wird. Es sind hierbei ebenso bereits adaptive Maßnahmen in das Verfahren mit einbezogen, die jedoch lediglich die Bewertung dieser besagten Zuschaltschwelle betreffen.

Somit ist die dort dargestellte Zielrichtung, daß man davon ausgeht, daß es Fälle gibt, in denen bei einer Notbremsung der Fahrer das Pedal zwar mit hoher Geschwindigkeit betätigt, jedoch nur eine unzureichende Kraft auf das Pedal ausübt. Durch die Fremdkraft wird daher in dieser Situation der Fahrer unterstützt und eine Bremskraft hervorgerufen, die höher ist als die Bremskraft, die bei normaler Pedalbetätigung der Pedalkraft entsprechen würde.

Nachteilig ist bei diesem Verfahren jedoch, daß die strategische Steuerung der Bremsung mehr oder weniger ausschließlich auf die Bewertung des Pedalweges bzw. der Pedalbetätigungsgeschwindigkeit abgestellt wird. Dies ist jedoch für die Bewertung von Fahrsituationen unzureichend.

Aus der EP 0661188 A1 ist ein automatisches Fahrzeuggeschwindigkeitskontrollsystem bekannt, bei welchem ebenfalls ein Abstandsregler eingesetzt wird.
Zusätzlich zum Abstandssignal arbeitet dieses System definitiv mit der Fahrzeuggeschwindigkeit. Somit werden hierbei im wesentlichen Relativgrößen erfaßt und regelungstechnisch entsprechend verwertet. Das in diesem Stand der Technik gezeigte System ist somit ein Tachometersystem im üblichen Sinne, welches mit einer Abstandsregelung korreliert. Spezielle Maßnahmen, die die Bremsvorgänge als solches bewerten, sind hierbei nicht gezeigt, da sich das System im wesentlichen mit einer strategischen Anpassung der Geschwindigkeit befaßt. D. h., Bremsvorgänge werden in diesem Stand der Technik lediglich als Stellvorgänge zur strategischen oder taktischen Bemessung einer Durchschnittsgeschwindigkeit oder einer optimal nutzbaren Geschwindigkeit eingesetzt. Eine Optimierung der Bremse als solches erfolgt hierbei nicht.

Die DE 195 09 178 A1 offenbart ein Abstandsregelgerät für Fahrzeuge mit einer Geschwindigkeitserfassungseinrichtung zur Erfassung der Geschwindigkeit des Fahrzeugs sowie eine Abstandsmesseinrichtung zur Messung des Abstands zwischen dem Fahrzeug und einem vorausfahrenden Fahrzeug. Weiterhin vorhanden ist eine Fahrermodell-Berechnungseinrichtung zur Berechnung eines Fahrermodell-Verzögerungsabstands und eines Fahrermodell-Beschleuhigungsabstands anhand der Fahrzeuggeschwindigkeit und des Abstands und dem Bedienungsverhalten des Fahrers. Eine Fahrzeugmodell-Berechnungseinrichtung berechnet einen Fahrzeugmodell-Verzögerungsabstand anhand der Fahrzeuggeschwindigkeit und physikalischer Fahrzeugeigenschaften. In dem Abstandsregelgerät ist ebenfalls eine Regeleinrichtung zur Verzögerung des Fahrzeugs gemäß dem größeren der Fahrermodell- und Fahrzeugmodell-Verzögerungsabstände und zur Beschleunigung des Fahrzeugs gemäß dem Fahrermodell-Beschleunigungsabstand vorhanden.

Der vorliegenden Erfindung liegt somit die Aufgabe zugrunde, ein Verfahren zur Steuerung oder Regelung der Verzögerung bzw. Bremsung eines Kraftfahrzeugs zu schaffen, das unter Berücksichtigung des individuellen Fahrerverhaltens in normalen Fahrsituationen wirtschaftlich und in gefährlichen Fahrsituation mit optimaler Ausnutzung des verbleibenden Bremsweges durchzuführen ist.

Die gestellte Aufgabe ist hinsichtlich eines Verfahrens der gattungsgemäßen Art erfindungsgemäß durch die kennzeichnenden Merkmale des Patentanspruches 1 gelöst. Weitere vorteilhafte Ausgestaltungen der verfahrensgemäßen Erfindung sind in den abhängigen Ansprüchen 2 bis 11 angegeben.

Zum besseren Verständnis seien kurz zwei regelungstechnische Begriffe erläutert, die beim erfindungsgemäßen Verfahren eine besondere Rolle spielen.

Es ist zu unterscheiden zwischen taktischer Verfahrensweise und strategischer Verfahrensweise. Gemeint ist damit folgendes. Bei einer taktischen Verfahrensweise wird immer lediglich auf die aktuelle Situationsänderung regelungstechnisch reagiert. D. h., das System arbeitet ausschließlich mit scharfen Grenzwerten, die bei Überschreitung erst einen Vorgang bzw. eine Stellgröße erzeugen. Bei strategischen Verfahren hingegen werden Situationen über einen Zeitraum beobachtet und die Fahrsituation als solches wird dann innerhalb von Grenzbereichen optimiert. Eine solche strategische Vorgehensweise verlangt natürlich adaptive Systeme, die nach Mustern arbeiten. Adaptiv bedeutet, daß das System mit Hilfe von Mikroprozessoren und entsprechenden Speichermedien eine Vielzahl von Fahrsituationen erfaßt und während der Regelung ihre Parameter stets optimiert.

Das Wesen der Erfindung besteht somit darin, für eine optimale Regelung der Verzögerung bzw. Bremsung des Fahrzeuges eine Mehrzahl von Parametern, die die aktuelle Fahrsituation wiedergeben, zu berücksichtigen.
Kern der Erfindung ist es dabei, mit Hilfe einer Mehrzahl bewerteter Parameter das Bremssystem bzw. das abstandsregelnde Verzögerungssystem "fahreradaptiv" zu gestalten.

Die verfahrensgemäße Erfindung wird im wesentlichen in zwei Betriebsarten verwendet,
**a)** Manuelle Bremsung
   Einbindung der erfindungsgemäßen fahrer- und situationsspezifischen Parameter bei Bremsungen die durch Bremspedalbetätigung eingeleitet werden.
   Hierbei wird die vom Fahrer eingeleitete Bremsung unterstützt.
**b)** Automatische Bremsung bzw. Verzögerung mit ADR
   Einbindung der erfindungsgemäßen fahrer- situationsspezifischen Parameter in ein eingeschaltetes Abstandsregelungssystem ADR.
   Hierbei wird automatisch gebremst, und zwar in der Art, daß das Bremsverhalten des Fahrers in erfindungsgemäßer Weise nachempfunden wird.

Die grundsätzliche erfindungsgemäße Vorgehensweise beim Erlernen, bzw. Adaptieren der fahrerspezifischen Brems- bzw. Verzögerungsparameter ist für beide Betriebsarten gleich. Die zwei genannten Betriebsarten binden diese ermittelten fahrerspezifischen Bremsstrategiedaten demzufolge entweder beim manuellen Bremsvorgang oder bei automatischer Bremsung bzw. Verzögerung bei ADR-Betrieb mit ein.

Ausgehend von den beiden Parametern Sollverzögerung und vorhandener Bremsweg - gleichlautend mit Abstand zum vorausfahrenden Fahrzeug - wird das sogenannte Kennfeld um weitere Parameter, nämlich die Istgeschwindigkeit und den Reibwert der Fahrbahn, erweitert und in die Regelung der Bremsung einbezogen. In diesem Falle ist das sich ergebende Kennfeld ein vierdimensionales. Das Wesen der Erfindung besteht jedoch nicht nur in der Einbeziehung einer Mehrzahl von Parametern in die Regelung der Bremsung oder Verzögerung des Fahrzeuges, sondern darin, das gesamte System wie bereits gesagt "fahreradaptiv" auszulegen. Dies bedeutet, daß das individuelle Bremsverhalten, oder sogar das Fahrverhalten insgesamt, eines jeden individuellen Fahrers als "Muster" datenmäßig erfaßt und gespeichert wird. Hierbei wird beispielsweise auch mitberücksichtigt, daß in den meisten Fällen ein Fahrzeug nicht nur von einem Fahrer benutzt wird. Das erfindungsgemäße Verfahren geht jedoch immer von einem grundsätzlichen Kennfeld aus, welches entweder ein fest abgespeichertes oder das zuletzt optimierte ist.

Das Kennfeld, welches weiter unten noch beschrieben wird, kann entweder vorliegen als numerisches Kennfeld, oder in Form sogenannter Fuzzy-Regeln, oder als neuronales Netzwerk. Die Vorgehensweise ist die, daß über einen Algorithmus während der Fahrt bei nichteingeschalteter Abstandsregelung ADR, die folgenden Daten gesammelt werden: Geschwindigkeit, Sollverzögerung, Reibwert der Fahrbahn und Abstand, bei dem der Bremseingriff durch den Fahrer erfolgt.

Bereits hier wird deutlich, daß beim erfindungsgemäßen Verfahren das adaptive System in der Lage ist, die Fahr- und Bremsgewohnheiten des Fahrers schon bei der ersten Bremsaktion zu ermitteln. D.h., das System erkennt, ob der Fahrer beispielsweise eher defensiv fährt und einen etwas höheren Abstand zum vorausfahrenden Fahrzeug wählt oder ob seine Fahrweise aggressiver ist und somit sehr viel näher den physikalischen Grenz - situationen angenähert ist. Diese aus aktuellen Bremswerten ermittelten Parameter werden als Zusatzkennfeld abgespeichert. Durch die Korrelation zwischen Geschwindigkeit und Abstand können ebenfalls bereits gefährliche Fahrsituationen, vor Auftreten einer aktuellen Bremsforderung, erkannt werden. Die besagte Adaption des sogenannten Kennfeldes erfolgt dabei durch Überlagerung bzw. numerische Addition des vorhandenen Kennfeldes mit dem besagten zusätzlichen Kennfeld. Auch hierbei kann das zusätzliche Kennfeld entweder numerisch, d.h., durch analytische Formeln vorliegen, oder durch Fuzzy-Regeln, oder als neuronales Netzwerk.

Die erfindungsgemäße Vorgehensweise läßt sich am Beispiel des oben genannten vierdimensionalen Kennfeldes so beschreiben, daß vier Sensorkomplexe existieren, die da sind, Abstandssensor zur Ermittlung des Abstandes zum vorausfahrenden Fahrzeug oder zu einem Hindernis; eine sogenannte druckmittelbetriebene Bremseinheit zur Ermittlung der Sollverzögerung; Ermittlung der Istgeschwindigkeit; eine Reibwertermittlung der Fahrbahn bzw. des Reibwertes zwischen Rad und Fahrbahn. Diese vier Parameter gehen sodann in das besagte sogenannte zusätzliche Kennfeld ein. Dieses Kennfeld lernt" immer dann, wenn entweder in entsprechenden Zeittakten oder ausgelöst durch eine deutliche Änderung der aktuellen Fahrsituation neue Parameter bereitgestellt werden. Diese werden in das zusätzliche Kennfeld eingelesen. Wie oben bereits ausgeführt, weist das System stets ein eigenes Kennfeld auf, welches beispielsweise fest angelegt ist oder aus dem zuletzt ermittelten optimierten Kennfeld aus der letzten Betriebsphase des Fahrzeuges stammt. Dieses vorhandene Kennfeld kann dabei bei jeder neuen Inbetriebnahme des Fahrzeuges bereitgestellt werden. Nun findet aus dem aktuell gelernten zusätzlichen Kennfeld mit den aktuellen Fahrsituationsdaten eine Überlagerung mit dem vorhandenen Kennfeld statt. Das Ergebnis der Überlagerung ist das besagte adaptierte Kennfeld. Im Ergebnis bedeutet das, daß das erfindungsgemäße Verfahren in der Lage ist, sogenannte verschiedene Fahrercharaktere" zu erkennen. Weiterhin erfindungsgemäß ist dabei dann, diese nicht nur zu erkennen, sondern die Verzögerungen, bzw. Bremsungen des Fahrzeuges, auf jeden Fahrertyp zu optimieren.

Durch die Verwendung einer Mehrzahl von Parametern sind die Fahrsituationen als solches erheblich differenzierbarer, was bei der vorliegenden Erfindung wie bereits ausgeführt soweit geht, daß sogar unterschiedliche Fahrertypen erkannt werden können. Dies führt letztendlich dazu, daß erkannt werden kann, ob der jeweilige Fahrer im oben beschriebenen Sinne ein eher taktisches, oder ein eher strategisch defensives Fahrverhalten hat. Dementsprechend genau angepaßt ist mit der erfindungsgemäßen Verfahrensweise eine entsprechend mehr taktische oder mehr strategische Regelung des Bremsvorganges möglich. Das erfindungsgemäße System ist darüber hinaus so universell, daß in die erfindungsgemäße Verfahrensweise auch ansonsten bekannte und übliche Bremssysteme mit einbezogen werden können.

Die Erfindung ist hinsichtlich ihrer Verfahrensweise in der Zeichnung dargestellt und nachfolgend näher beschrieben.

Es zeigt:
- Fig. 1:: Funktionsdiagramm für verfahrensgemäße Vorgehensweise.
- Fig. 2:: 2-dimensionales Kennfeld.

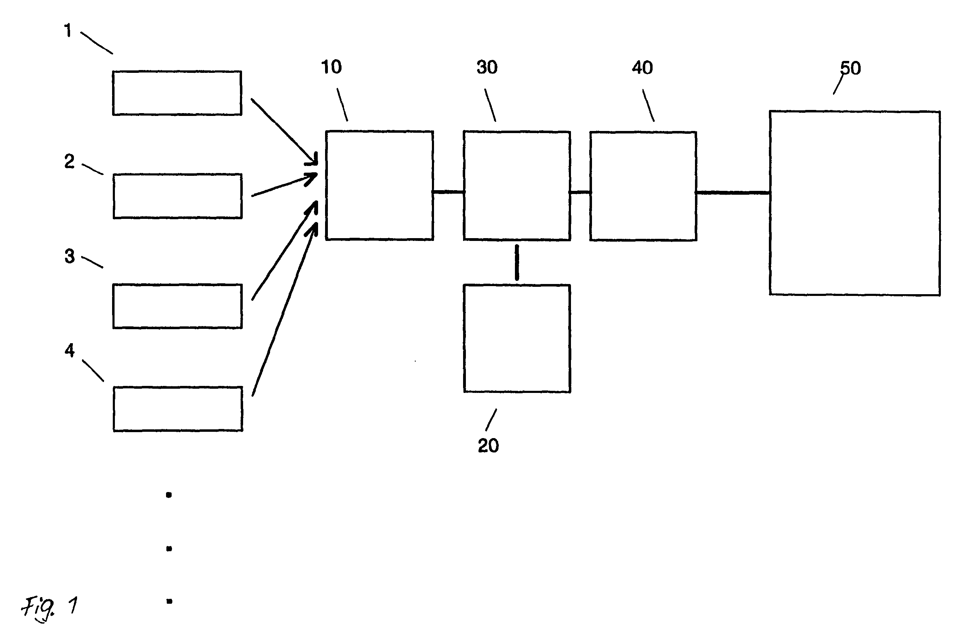

Fig. 1 macht die Verfahrensweise der Erfindung deutlich. Als Eingangsgrößen zur Ermittlung des besagten Parameterfeldes werden die Werte eines Abstandsensors 1, einer druckmittelbetriebenen Bremseinheit 2 zur Ermittlung der Sollverzögerung, eines Tachometersystems 3 zur Ermittlung der Istgeschwindigkeit, sowie einer Reibwerterkennung 4 zur Ermittlung des aktuellen Reibwertes der Fahrbahn bereitgestellt. Somit stehen in diesem Beispiel 4 Parameter als Bewertungsgrößen zur Verfügung. Es können wie weiter unten noch ausgeführt noch weitere Bewertungsgrößen durch zusätzliche Sensoren oder Berechnungen berücksichtigt werden. Diese Bewertungsgrößen werden einem Erfassungssystem 10 zugeführt, in welchem das zusätzliche Kennfeld gebildet wird. Das besagte Kennfeld ist ein entsprechend vierdimensional angelegtes Datenfeld. Dieses Datenfeld ist in der Lage, entweder in einstellbaren Zeittakten oder quasi kontinuierlich fortlaufend Sensorwerte bzw. Parameter der einzelnen Sensoren 1 bis 4 zu erfassen. Darüber hinaus kann die Einheit 10 jedoch ein Mikroprozessor - System enthalten, über welches die Parameter und deren entsprechende Zuordnung durch analytische Formeln berechnet werden. Wie bereits gesagt, werden die besagten Werte der Sensoren 1 bis 4 während der Fahrt bei nichteingeschalteter Abstandsregelung (ADR) ermittelt. So kann beispielsweise ermittelt werden, bei welchen aktuellen Parametern die Geschwindigkeit, Sollverzögerung, Reibwert und Abstand der Fahrer mit einem Bremseingriff reagiert.

In Berücksichtigung der beiden oben genannten Betriebsarten in die das erfindungsgemäße Verfahren eingebunden sein kann ergeben sich nachfolgend zweckmäßiger weise folgende Parameter die berücksichtigt werden:
Für a) manueller Bremseingriff:
   Die zweckmäßigerweise berücksichtigten Parameter sind Abstand bzw. Bremsweg, Steigungserkennung, Istgeschwindigkeit und Istbeschleunigung, Lenkwinkel, Bremsdruck, Reibwert sowie dementsprechend Istverzögerung bzw. Istbremsdruck. Bei dieser Betriebsart vergleicht das System einfach den Ist- und den Sollbremsdruck und erhöht dementsprechend den Bremsdruck, wenn es die Fahrsituation erfordert. Dies geschieht dabei in erfindungsgemäßer Weise ebenfalls noch in Abhängigkeit von den genannten fahrerspezifischen Parametern.
Für b) automatische Bremsung bzw. Verzögerung.
   Die zweckmäßigerweise berücksichtigten Parameter sind Abstand bzw. Bremsweg, Steigungserkennung, Istgeschwindigkeit und Istbeschleunigung, Lenkwinkel, Bremsdruck, Reibwert. Bei dieser Betriebsart liefert das System am Ausgang des weiter unten noch beschriebenen adaptierten Kennfeldes 40 dann die Sollverzögerung bzw. den Sollbremsdruck der dann auf das Bremssystem 50 geführt wird.

Im zusätzlichen Kennfeld der Einheit 10 sind die Werte, die die Bremsstrategie des Fahrers mathematisch bzw. physikalisch beschreiben, enthalten.

Überdies weist das System ein bereits vorhandenes Referenz-Kennfeld 20 auf, welches beispielsweise aus einem festangelegten optimierten Kennfeld besteht, oder aus einem bei längeren Betriebsphasen als optimal ermittelten Kennfeld besteht. Sodann findet eine Überlagerung in einer Einheit 30 statt, welche beispielsweise durch Addition das vorhandene Kennfeld mit dem zusätzlichen Kennfeld interferiert bzw. überlagert.
Als Ergebnis erhält man ein adaptiertes Kennfeld 40, welches nunmehr die individuelle fahrertypische Bremsstrategie in Form eines oder mehrerer Parametersätze enthält. Um eine fahrertypische Unterscheidung durchführen zu können und zu einem adaptierten Kennfeld zu kommen, ist es notwendig, wie bereits gesagt, von einem vorhandenen festen Kennfeld 20 als Referenz auszugehen. Nur so lassen sich fahrertypische Abweichungen erkennen.

Ausgehend von dem adaptierten Kennfeld 40 wird sodann der Eingriff auf das Bremssystem 50 gebildet. Das Bremssystem 50 umfaßt zum einen die gesamte druckmittelbetriebene Bremseinheit sowie auch die hierarchisch übergeordneten elektronischen Regelungskompomenten der Bremse. Darin enthalten sein können ABS - Antiblockiersystem - sowie andere Systeme.

Grundsätzlich kann die Adaptionsstrategie nach verschiedenen Vorgaben erfolgen:
1. Das System adaptiert sich immer wieder neu, wenn das Fahrzeug in Betrieb genommen wird und löscht das Zusatzkennfeld, wenn das Fahrzeug außer Betrieb genommen wird.
2. Das System adaptiert immer ohne das zusätzliche Kennfeld 10 zu löschen.
3. Das System speichert eine Anzahl zusätzlicher Kennfelder und benutzt das richtige Kennfeld nach der Fahreridentifikation. Die Fahreridentifkation kann dabei dadurch vorgenommen werden, daß jeder Fahrer einen für sich persönlich codierten Zündschlüssel benutzt oder eine Abfrage über das Display des Fahrzeuges erfolgt.
4. Das System speichert eine Anzahl zusätzlicher Kennfelder 10 und benutzt das richtige Kennfeld, in dem es Bremsvorgänge des Fahrers mit den vorhandenen Zusatzkennfeldern vergleicht und dann das passendste Kennfeld auswählt.

Die Erkennung bzw. Ermittlung der Bremsstrategie des jeweiligen Fahrers heißt funktional, daß beispielsweise ermittelt wird bei welchen Geschwindigkeiten und bei welchem Abstand, bei welchen Reibwerten der Fahrbahn etc. leitet der jeweilige Fahrer mit welcher Sollverzögerung die Bremsung ein.

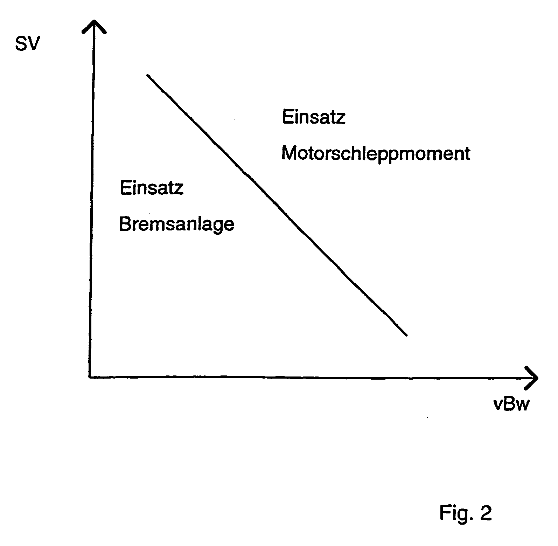

Figur 2 zeigt in einem Diagramm die Funktion bzw. den mathematischen Aufbau eines Kennfeldes, jedoch lediglich mit zweidimensionalem Charakter. Auf der Ordinate aufgetragen ist die Sollverzögerung SV und auf der Abszisse aufgetragen ist der vorhandene Bremsweg vBw, welcher aus dem Abstand zum vorausfahrenden Fahrzeug ermittelt wird. In dieser funktionalen Abhängigkeit der beiden Parameter zueinander erscheint eine Gerade, die die einzubringenden Verzögerungen bzw. Bremsungen in zwei Bereiche unterteilt. Oberhalb der Kurve, d.h., für SV-Werte in Abhängigkeit von vBw-Werten oberhalb der Geraden, genügt zur Verzögerung des Fahrzeuges der Einsatz des Motorschleppmomentes Unterhalb der dargestellten Gerade bedarf es bereits dem Einsatz der Bremsanlage.

Dieses lediglich nur zweidimensionale Kennfeld macht zum einen deutlich, in welcher Abhängigkeit von berücksichtigten Parametern welche Bremsart notwendig ist und zum anderen macht dieses Diagramm deutlich, daß es zwischen den Parametern funktionale Abhängigkeiten gibt. Die funktionale Abhängigkeit in diesem zweidimensionalen Kennfeld ist durch die gerade Linie dargestellt. Demgegenüber erweitert die verfahrensgemäße Erfindung das Kennfeld nun auf einen höher dimensionalen Charakter, welcher, wie oben bereits ausgeführt, drei- oder vierdimensional, oder in Einbeziehung aller genannter Parameter auch 7-dimensional oder höher sein kann. Dadurch wird die Einflußnahme auf die Bremsung effektiver und differenzierter.

Das erfindungsgemäße Verfahren kann in herkömmliche Systeme mit ABS -Antiblockiersystem - , mit Schlupfregelsystemen, und / oder mit ADR - Abstandsregelsystemen - kombiniert werden.

Insgesamt führt der Einsatz des erfindungsgemäßen Verfahrens nicht nur zu einer Erhöhung der Sicherheit sondern auch zu einer Erhöhung des Fahrkomforts.

## Patentansprüche

1. Verfahren zur Steuerung oder Regelung der Verzögerung bzw. Bremsung eines Kraftfahrzeuges in Abhängigkeit zum aktuell im Fahrbetrieb vorhandenen Bremsweg bzw. aktuellen Abstand zum vorausfahrenden Fahrzeug, bei welchem die Verzögerung bzw. Bremsung des Fahrzeuges **dadurch** bewirkt wird, dass bei Überschreitung von vorgegebenen fahrbetriebsbezogenen Parametergrenzwerten die Fahrzeugbremse betätigt wird, und im Falle der Unterschreitung von besagten Parametergrenzwerten eine lediglich vom Motorschleppmoment bewirkte Verzögerung generiert wird,
**dadurch gekennzeichnet,**
**dass** während des Fahrbetriebes zuzüglich zum Parameter "Bremsweg," bzw. Abstand, weitere Parameter als fahrerbezogener Parametersatz erfasst und in einem Zusatz-Kennfeld abgespeichert werden und aus der Korrelation mit dem Datensatz eines vorgegebenen Referenz-Kennfeldes die Bremsstrategie des jeweiligen Fahrers ermittelt wird, wobei die weiteren Parameter mindestens die Sollverzögerung, die Istgeschwindigkeit und der Reibwert der Fahrbahn sind.

2. Verfahren zur Steuerung oder Regelung der Verzögerung bzw. Bremsung eines Kraftfahrzeuges nach Anspruch 1
**dadurch gekennzeichnet,**
**dass** bei gleichzeitigem Betrieb einer Abstandsregelung im Bedarfsfall eine automatische Bremsung bzw. Sollverzögerung mit Hilfe der ermittelten fahrerspezifische Bremsstrategie bzw. der daraus ermittelten Sollverzögerung generiert wird.

3. Verfahren zur Steuerung oder Regelung der Verzögerung bzw. Bremsung eines Kraftfahrzeuges nach Anspruch 1,
**dadurch gekennzeichnet,**
**dass** bei Überschreitung von vorgegebenen fahrbetriebsbezogenen Parametergrenzwerten eine zur Pedalbetätigung überproportionale Erhöhung des Bremsdruckes mit Hilfe der ermittelten fahrerspezifische Bremsstrategie bzw. der daraus ermittelten Sollverzögerung generiert wird.

4. Verfahren zur Steuerung oder Regelung der Verzögerung bzw. Bremsung eines Kraftfahrzeuges, nach Anspruch 2 oder 3,
**dadurch gekennzeichnet,**
**daß** bei Änderung eines oder mehrerer der Parameter in das Zusatz-Kennfeld die gegebenen Parameter neu eingelesen werden und mit dem vorhandenen Kennfeld überlagert wird und daraus ein weiteres adaptives Kennfeld erzeugt wird.

5. Verfahren zur Steuerung oder Regelung der Verzögerung bzw. Bremsung eines Kraftfahrzeuges, nach Anspruch 4,
**dadurch gekennzeichnet,**
**daß** das System sich immer dann neu adaptiert, wenn eine Zündung bzw. Inbetriebnahme des Kraftfahrzeuges erfolgt und das während des Fahrbetriebes ermittelte Zusatzkennfeld dann gelöscht wird, wenn das Fahrzeug wieder außer Betrieb genommen wird.

6. Verfahren zur Steuerung und Regelung der Verzögerung bzw. Bremsung eines Kraftfahrzeuges, nach einem oder mehreren der vorhergehenden Ansprüche,
**dadurch gekennzeichnet,**
**daß** das System immer adaptiert ohne das Zusatzkennfeld zu löschen.

7. Verfahren zur Steuerung oder Regelung der Verzögerung bzw. Bremsung eines Kraftfahrzeuges nach einem oder mehreren der vorhergehenden Ansprüche,
**dadurch gekennzeichnet,**
**daß** das System eine Anzahl von Zusatzkennfeldern und benutzt das entsprechende Kennfeld nach der Vornahme einer Fahreridentifikation auswählt.

8. Verfahren zur Steuerung oder Regelung der Verzögerung bzw. Bremsung eines Kraftfahrzeuges nach Anspruch 7,
**dadurch gekennzeichnet,**
**daß** die Fahreridentifikation durch Abgabe eines personenspezifischen Codes über Zündschlüssel oder Displayeingabe erfolgt.

9. Verfahren zur Steuerung oder Regelung der Verzögerung bzw. Bremsung eines Kraftfahrzeuges nach einem oder mehreren der vorgehenden Ansprüche,
**dadurch gekennzeichnet,**
**daß** das System eine Anzahl von Zusatzkennfeldern speichert und daß anhand der Bremsstrategie des Fahrers das personenspezifische Zusatzkennfeld ausgewählt und verwendet wird.

10. Verfahren zur Steuerung oder Regelung der Verzögerung bzw. Bremsung eines Kraftfahrzeuges nach einem oder mehreren der vorgehenden Ansprüche,
**dadurch gekennzeichnet,**
**daß** als Referenz-Kennfeld ein werksseitig eingebrachtes Kennfeld vorgegeben ist.

11. Verfahren zur Steuerung oder Regelung der Verzögerung bzw. Bremsung eines Kraftfahrzeuges nach einem oder mehreren der vorgehenden Ansprüche,
**dadurch gekennzeichnet,**
**daß** als Referenz-Kennfeld ein in einem oder mehreren Fahrbetrieben langfristig optimiertes Kennfeld verwendet bzw. zugrundegelegt wird.

## Claims

1. Method for controlling the deceleration and/or braking of a motor vehicle as a function of the braking distance currently available in the driving mode and/or current distance from the vehicle travelling in front, in which method the deceleration and/or braking of the vehicle is brought about in that, when prescribed paramenter limits which relate to the driving mode are exceeded, the vehicle brake is actuated and, in the event of the parameter values dropping below aforesaid parameter limits, a deceleration which is brought about exclusively by the engine torque is generated, **characterized in that**, during the driving mode, further parameters, in addition to the "braking distance" and/or distance parameters, are sensed as driver-specific parameter set and are stored in an additional characteristic diagram, and the braking strategy of the respective driver is determined from the correlation with the data set of a prescribed reference characteristic diagram, the further parameters being at least the setpoint deceleration, the actual speed and the coefficient of friction of the carriageway.

2. Method for controlling the deceleration and/or braking of a motor vehicle according to Claim 1, **characterized in that**, during simultaneous operation of a distance control system, if required, automatic braking and/or setpoint deceleration is generated with the aid of the driver-specific braking strategy which is determined and/or of the setpoint deceleration which is determined therefrom.

3. Method for controlling the deceleration and/or braking of a motor vehicle according to Claim 1, **characterized in that**, when prescribed parameter limits which relate to the driving mode are exceeded, an increase in the braking pressure which is overproportional with respect to the pedal actuation is generated with the aid of the driver-specific braking strategy which is determined and/or the setpoint deceleration which is determined therefrom.

4. Method for controlling the deceleration and/or braking of a motor vehicle according to Claim 2 or 3, **characterized in that**, when one or more of the parameters changes, the given parameters are reinput into the additional characteristic diagram, and the existing characteristic diagram is superimposed thereon and a further adaptive characteristic diagram is generated therefrom.

5. Method for controlling the deceleration and/or braking of a motor vehicle according to Claim 4, **characterized in that** the system re-adapts itself whenever an ignition and/or activation of the motor vehicle takes place, and the additional characteristic diagram which is determined during the driving mode is cleared when the vehicle is deactivated again.

6. Method for controlling the deceleration and/or braking of a motor vehicle according to one or more of the existing claims, **characterized in that** the system always adapts without deleting the additional characteristic diagram.

7. Method for controlling the deceleration and/or braking of a motor vehicle according to one or more of the preceding claims, **characterized in that** the system uses a number of additional characteristic diagrams and selects the corresponding characteristic diagram after an identification of the driver has been performed.

8. Method for controlling the deceleration and/or braking of a motor vehicle according to Claim 7, **characterized in that** the identification of the driver is carried out by outputting a person-specific code via ignition key or display input.

9. Method for controlling the deceleration and/or braking of a motor vehicle according to one or more of the preceding claims, **characterized in that** the system stores a number of additional characteristic diagrams, and **in that** the person-specific additional characteristic diagram is selected with reference to the braking strategy of the driver, and is used.

10. Method for controlling the deceleration and/or braking of a motor vehicle according to one or more of the existing claims, **characterized in that** a characteristic diagram which is installed at the works is prescribed as reference characteristic diagram.

11. Method for controlling the deceleration and/or braking of a motor vehicle according to one or more of the existing claims, **characterized in that** a characteristic diagram which is optimized over the long term in one or more driving modes is used, or is taken as the basis, as a reference characteristic diagram.

## Revendications

1. Procédé pour commander ou réguler le ralentissement ou le freinage d'un véhicule automobile en fonction de la course de freinage actuellement présente en situation de déplacement ou de l'écart actuel par rapport au véhicule qui précède, avec lequel le ralentissement ou le freinage du véhicule est réalisé en ce que le frein du véhicule est actionné en cas de dépassement de valeurs limites de paramètres prédéfinies en fonction de la situation de déplacement et que seul un ralentissement exercé par le couple résistant du moteur est généré en cas de franchissement vers le bas desdites valeurs limites de paramètres, **caractérisé en ce que** d'autres paramètres sont acquis pendant le déplacement en plus des paramètres « course de freinage » ou écart sous la forme d'un jeu de paramètres en rapport avec le conducteur et enregistrés dans un diagramme caractéristique supplémentaire et la stratégie de freinage du conducteur correspondant est déterminée à partir de la corrélation avec le jeu de données d'un diagramme caractéristique de référence prédéfini, les autres paramètres étant au moins le ralentissement de consigne, la vitesse réelle et l'indice de frottement de la chaussée.

2. Procédé pour commander ou réguler le ralentissement ou le freinage d'un véhicule automobile selon la revendication 1, **caractérisé en ce que** lors de l'utilisation simultanée d'un dispositif de régulation de l'écart, un freinage ou un ralentissement de consigne automatique est généré en cas de besoin à l'aide de la stratégie de freinage spécifique au conducteur déterminée ou du ralentissement de consigne déterminé à partir de celle-ci.

3. Procédé pour commander ou réguler le ralentissement ou le freinage d'un véhicule automobile selon la revendication 1, **caractérisé en ce qu'**en cas de dépassement des valeurs limites de paramètres prédéfinies en fonction de la situation de déplacement, une augmentation de la pression de freinage surproportionnelle à l'actionnement de la pédale est générée à l'aide de la stratégie de freinage spécifique au conducteur déterminée ou du ralentissement de consigne déterminé à partir de celle-ci.

4. Procédé pour commander ou réguler le ralentissement ou le freinage d'un véhicule automobile selon la revendication 2 ou 3, **caractérisé en ce qu'**en cas de modification d'un ou de plusieurs paramètres dans le diagramme caractéristique supplémentaire, les paramètres donnés sont de nouveau relevés et superposés avec le diagramme caractéristique existant et à partir de là est généré un autre diagramme caractéristique adaptatif.

5. Procédé pour commander ou réguler le ralentissement ou le freinage d'un véhicule automobile selon la revendication 4, **caractérisé en ce que** le système se réadapte à chaque fois lorsqu'un allumage ou une mise en service du véhicule automobile a lieu et le diagramme caractéristique supplémentaire déterminé pendant le déplacement est supprimé lorsque le véhicule est de nouveau mis hors service.

6. Procédé pour commander ou réguler le ralentissement ou le freinage d'un véhicule automobile selon une ou plusieurs des revendications précédentes, **caractérisé en ce que** le système s'adapte toujours sans supprimer le diagramme caractéristique supplémentaire.

7. Procédé pour commander ou réguler le ralentissement ou le freinage d'un véhicule automobile selon une ou plusieurs des revendications précédentes, **caractérisé en ce que** le système utilise un certain nombre de diagrammes caractéristiques supplémentaires et sélectionne le diagramme caractéristique correspondant après avoir effectué une identification du conducteur.

8. Procédé pour commander ou réguler le ralentissement ou le freinage d'un véhicule automobile selon la revendication 7, **caractérisé en ce que** l'identification du conducteur s'effectue en indiquant un code spécifique à la personne par le biais de la clé de contact ou d'une saisie à l'écran.

9. Procédé pour commander ou réguler le ralentissement ou le freinage d'un véhicule automobile selon une ou plusieurs des revendications précédentes, **caractérisé en ce que** le système enregistre un certain nombre de diagrammes caractéristiques supplémentaires et **en ce que** le diagramme caractéristique supplémentaire spécifique à la personne est sélectionné au moyen de la stratégie de freinage du conducteur puis utilisé.

10. Procédé pour commander ou réguler le ralentissement ou le freinage d'un véhicule automobile selon une ou plusieurs des revendications précédentes, **caractérisé en ce que** le diagramme caractéristique de référence prédéfini est un diagramme caractéristique saisi en usine.

11. Procédé pour commander ou réguler le ralentissement ou le freinage d'un véhicule automobile selon une ou plusieurs des revendications précédentes, **caractérisé en ce que** le diagramme caractéristique de référence utilisé ou servant de base prédéfini est un diagramme caractéristique optimise à long terme pendant un ou plusieurs déplacements.
